# EUROPEAN PATENT SPECIFICATION

(11) **EP 1 771 019 B1**
(45) Date of publication and mention of the grant of the patent: **08.04.2009**
(21) Application number: 06121566.1
(22) Date of filing: 29.09.2006
(51) Int. Cl.: H04W 12/06

(54) **Subscriber identity apparatus which is wirelessly connected to communication terminal**
Teilnehmeridentitätsvorrichtung, die drahtlos an einem Kommunikationsendgerät angeschlossen ist
Appareil d'identité d'abonné qui est connecté sans fil a un terminal de communicaiton

(30) Priority: 30.09.2005 CN 200510107409
(43) Date of publication of application: 04.04.2007
(73) Proprietor: Huawei Technologies Co., Ltd., Longgang District, Shenzhen Guangdong 518129 (CN)
(72) Inventor: Shibi Huang c/o Huawei Technologies Co. , Ltd., Guangdong Province, Shenzhen 518129 (CN)
(74) Representative: Gleiter, Hermann

(56) References cited:
- EP-A- 1 075 155
- WO-A1-20/04002176
- DE-A1- 19 823 074

## Description

### Field of the Invention

The present invention relates to communication technologies, and more particularly to a subscriber identity apparatus, a communication terminal, and a communication system and method.

### Background of the Invention

The Subscriber Identity Module (SIM), also called the Subscriber Identity Apparatus, is a component for identifying the subscriber identity. The application system may determine the subscriber identity by authenticating the unique subscriber identity information contained in the SIM. The SIM may also store the subscriber related information such as the subscriber number, short message, telephone book, key, cryptographic algorithm etc.

In the communication system, the communication service network needs to authenticate the subscriber identity. Only those who have been successfully authenticated may access the communication service network and to obtain the service permission. For example, in the 2G mobile communications, the GSM (Global System for Mobile Communications) network system performs the authentication by the subscriber identity information stored in the SIM (Subscriber Identity Module) card of the mobile terminal and only those which have been successfully authenticated may access the GSM network. The subscriber needs to input the authentication information such as the subscriber name, password and etc, and may access the Internet after he is successfully authenticated by the access system. In the communication system, the subscriber identity is used for charging besides for authentication, the communication service fee of the subscriber is associated with the subscriber identity and the service usage reckoning related to the subscriber identity is outputted.

A traditional subscriber identity authentication method in the communication system in the prior art is to attach the subscriber identity and the telephone line and make the telephone number configured for the telephone line correspond to the subscriber identity in the traditional PSTN (Public Switch Telephone Network).

For the fixed line terminal in the future fixed communication network, if the method of attaching the subscriber identity of PSTN terminal and the network SAP (Service Access Point) is continuously used, it will bring forward many problems in the security and mobility limitation. Since the identity of the subscriber using the fixed line terminal may not be authenticated, there is possibilities that some other illegal subscribers may use the fixed line terminal illegally, for example, for the office telephone in the fixed PSTN, some illegal subscriber may make international calls by using other's fixed telephone. Meanwhile, the mobility of the subscriber may be limited greatly, for example, when the subscriber is on business in another city, the incoming call of the subscriber is still routed to the registered fixed line terminal while maynot be routed to the fixed terminal, such as the telephone in the hotel and the office, in his current city, and such function may only be realized by configuring a complex service server in the network and setting data in the service server in time. When the subscriber moves to another place and uses another fixed line terminal, the communication fee may only be pertained to the corresponding fixed line terminal and maynot be pertained to the subscriber.

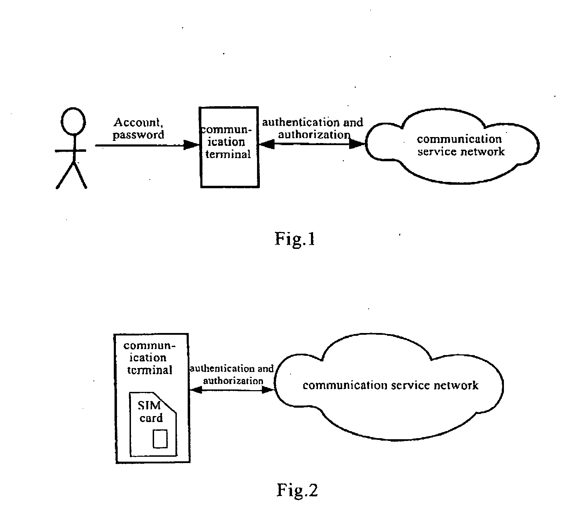

Another subscriber identity authentication method in the communication system in the prior art is realized on the communication terminals through the account number and the password inputted by the subscriber, which is a common identity authentication method based on the H.323, Call Server and etc in the fixed communication network. As shown in Figure 1, the subscriber inputs the authentication information such as the account number and the password to the fixed line terminal, and the fixed line terminal establishes the authentication and authorization procedure according to the account number. The specific authentication procedure may adopt the Challenge, Response or CA authentication method so as to avoid transmitting the plaintext of the account and password on network and to improve the authentication security.

For some public fixed line terminals shared by subscribers, a subscriber may be identified by inputting the subscriber account number for identifying the subscriber identity such as the card number and the password etc. However, such operations need to be performed every time the subscriber uses the terminal, which is extraordinarily inconvenient. Moreover, the security of the card number and the password maynot be guaranteed, and the account number is easily to be stolen by illegal subscribers. Meanwhile, this method may only be used to identify the identity of the subscriber who initiates the communication and since a plurality of subscribers share the same telephone number, this method maynot identify the identity of the calling subscriber and maynot use different indication tones to notify and identify different calling subscriber.

Another subscriber identity authentication method in the communication system in the prior art realizes the subscriber identity authentication of the network by the information, such as the subscriber identity, algorithm and key, stored in the subscriber identity module inserted to or set in the IC card of the communication terminal. For example, the subscriber uses SIM card in the 2G network and uses the USIM (Universal Subscriber Identity Module) card in the 3G network as the SIM to uniquely identify the subscriber and to realize the corresponding authentication, authorization and charging, which realizes the separation of the subscriber identity module and the terminal in the mobile communication. As shown in Figure 2, the authentication of the subscriber identity by the network is realized by the information, such as the subscriber identity, algorithm and key, stored in the subscriber identity module inserted to or set in the IC card of the communication terminal. This method includes the SIM card authentication mode in the 2G GSM network, the USIM card authentication mode in the 3G mobile network and the authentication mode of other embedded cards in the CDMA, PHS and other systems. The mobile terminal obtains the subscriber identity, algorithm and key stored in the IC card, which is inserted or embedded in the mobile terminal, by IC card's reading and writing machine, establishes the authentication and authorization procedure with the communication service network system through the authentication mechanisms such as the AKA (Authentication and Key Agreement). After being authenticated, the mobile terminal may access the communication service network system and enjoy the subscribed communication service.

WO 2004/002176 A1 discloses a system and method for allowing mobile devices to simultaneously access a subscriber identity module (SIM). The SIM contains a wireless transceiver and the mobile devices use a wireless protocol to retrieve identification information form the SIM and then use it to connect to a wireless communication network.

EP 1 075 155 A1 discloses a method for transmitting user identification data to a wireless communication device. The user data are stored in a user data identification module, wherein in connection with starting up of the wireless communication device, the user data are examined to find out the access rights of the user of the wireless communication device, and the user data are transmitted at least partly in a wireless manner from the user data identification module to the wireless communication device.

DE 19823074 A1 discloses a mobile station for performing communications using several subscriber profiles and particularly a mobile radio communication network in which the end terminals (mobile stations) are controlled by subscriber identity modules (SIMs).

In the 2G/3G mobile communication system, although the technology to separate the mobile terminal and the subscriber identity module is realized, the SIM or USIM card adopts the intelligent 1C card standard in ISO/IEC 7816, the IC card needs to be inserted in the mobile terminal when being in use and the data interact between the mobile terminal and the IC card through the IC card's reading and writing machine in the mobile terminal. Therefore, limited by the IC card's reading and writing machine's physical architecture, one SIM or one USIM IC card may only be attached with one mobile terminal during certain time. If a subscriber has a plurality of mobile terminals, different IC cards for identifying the subscriber identity should be applied for the mobile terminals which may not share one subscriber identity module. Accordingly, the service network will generate different billing for different subscriber identity modules of one subscriber, which brings great inconvenience for both the operator and the subscriber and costs a lot in human resources and expenses.

### Summary of the Invention

The present invention provides a communication terminal using the subscriber identity apparatus, a communication system, and a method for controlling the communication by using the communication terminal.

The present application provides a communication terminal which includes a central processor and a first interface module for accessing a communication service network. The communication terminal further includes a second interface module for accessing a local wireless network system. The central processor is adapted to receive a broadcast inquiry initiated by a subscriber identity apparatus after the subscriber identity apparatus enters a region covered by the local wireless network system, respond to the broadcast inquiry and establish communication transmission link with the subscriber identity apparatus, obtain subscriber identity information through the second interface module, attach a subscriber corresponding to the subscriber identity information ; and the central processor is also adapted to send a registration request to the communication service network, which carries the subscriber identity information, communication identity information corresponding to the subscribers allocated by the communication service network and second address information of the communication terminal allocated by the communication service network, such that the communication terminal performs registration authentication process to the communication service network system for the subscribers, and make the corresponding subscriber communicate with the communication service network through the first interface module and realize communication.

The present application further provides a subscriber identity apparatus for a communication terminal which is connected to a local wireless network system. The subscriber identity apparatus includes a subscriber identity module, adapted to store subscriber identity information; a wireless network interface module, adapted to access the local wireless network system; a central processing unit connected between the subscriber identity module and the wireless network interface module, adapted to control the subscriber identity apparatus to establish communication through the wireless network system with the communication terminal and send the identity information to the communication terminal. Steps of the central processing unit establishing communication through the wireless network system with the communication terminal includes: initiating a broadcast inquiry to the communication terminal after the subscriber identity apparatus enters a region covered by the local wireless network system; receiving a response to the broadcast inquiry sent by the communication terminal, and establishing the communication transmission link with the communication terminal.

The present application further provides a communication system which includes a communication service network, at least one communication terminal configured as above and at least one subscriber identity apparatus configured as above and a local wireless network system for realizing communication between the communication terminal and the subscriber identity apparatus.

The present application further provides a communication control method of a communication terminal for obtaining subscriber identity information from subscriber identity apparatuses through a local wireless network system and attaching subscribers corresponding to the subscriber identity information. In the communication control method, the subscriber identity apparatus initiates a broadcast inquiry to the communication terminal after the subscriber identity apparatus enters a region covered by the local wireless network system; the communication terminal responds to the broadcast inquiry and establishes communication transmission link with the subscriber identity apparatus; the communication terminal obtains subscriber identity information from the subscriber identity apparatus through the local wireless network system, attaches a subscriber corresponding to the subscriber identity information; the communication terminal sends a registration request to a communication service network, which carries the subscriber identity information, communication identity information corresponding to the subscribers allocated by the communication service network and second address information of the communication terminal allocated by the communication service network, such that the communication terminal performs registration authentication process to the communication service network system for the subscribers; the communication service network correspondingly records subscriber identity information, the communication identity information corresponding to the subscribers and the second address information of the communication terminal, and processes communication of the subscriber corresponding to the subscriber identity information according to the correspondence between the communication identity information of the subscriber and the second address information of the communication terminal.

The present invention solves the problem that one Subscriber Identity Module may only be attached to one terminal and realizes that one Subscriber Identity Module may be attached to a plurality of terminals at the same time or in time division. The present invention supports that a plurality of terminals of one subscriber may share the same Subscriber Identity Module, which simplifies the network management and operation and reduces the human resource and expenses. The present invention solves the problem that one terminal may only be attached to one Subscriber Identity Module and realizes that one terminal may be attached to a plurality of SIMs at the same time so that one terminal may be shared by a plurality of subscribers simultaneously. The present invention solves the problem that when the subscriber updates the terminal or changes the current terminal after movement, the IC card should be manually inserted or pulled out for the Subscriber Identity Module in the IC card mode.

The present invention is likely to have one or more than one of the following advantages:
1. the present invention realizes that one subscriber identity module may be attached to a plurality of communication terminals at the same time or in time division and support that a plurality of terminals of one subscriber may share the same subscriber identity module so as to simplify the network management and operation and to reduce the human resource and expenses.
2. the present invention realizes that one communication terminal may be attached to a plurality of subscriber identity modules at the same time, and supports that a plurality of subscribers may share the same terminal simultaneously and a plurality of family members may share the same terminal.
3. the present invention solves the problem that when the subscriber updates the terminal or changes the current terminal after movement, the IC card should be manually inserted or pulled out for the SIM in the IC card mode. The present invention adopts the wireless subscriber identity module to realize the automatic attaching of the terminal to the subscriber identity module, which avoids manual operations.
4. the present invention realizes the separation of the fixed line communication terminal and the subscriber identity module, and supports the subscriber to use the wireless subscriber identity module for registering and attaching different fixed line terminals after movement, which greatly improves the mobility service experience of the subscriber.
5. the present invention enables the subscriber to attach terminals at different place and of different type to a unique wireless subscriber identity module, dedicates communication fees of different terminals to the same subscriber, which brings great convenience to both the operator and the subscriber. Meanwhile, the present invention reduces the waste of human resources and expenses compared with the mode of charging for terminal or charging for a plurality of subscriber identity modules of the same subscriber.
6. the present invention enables the subscriber to attach terminals at different place and of different type to a unique wireless subscriber identity module, to download the interface, operation manner and indication information from the subscriber home database to different terminals according to the subscriber identity module, which guarantees that the experience mode on different terminals for the same subscriber will not be changed.
7. The wireless subscriber identity module as a unique identity of the subscriber accompanied with the authentication mechanism for providing security may be applied in the fields, such as the commerce, security etc, besides communication fields and has a broad application prospect.

### Brief Description of the Drawing

Figure 1 is a schematic diagram showing the procedure that a communication terminal establishing the authentication and authorization process with the communication service network system according to the authentication information when a traditional subscriber inputs the authentication information such as the account number and the password into the communication terminal;
Figure 2 is a schematic diagram showing the procedure that a traditional subscriber uses the SIM card to uniquely identify the subscriber and realizes the corresponding authentication;
Figure 3 is a schematic diagram showing the architecture of a communication system according to an embodiment of the present invention;
Figure 4 is a schematic diagram showing the architecture of a subscriber identity apparatus according to an embodiment of the present invention;
Figure 5 is a schematic diagram showing the architecture of a communication terminal according to an embodiment of the present invention.

### Detailed Description of the Invention

The present invention provides a subscriber identity apparatus and method for satisfying the above requirements. The communication system according to the present invention realizes the separation of the subscriber identity apparatus and the network communication terminal, supports the flexible attaching mode of the subscriber identity apparatus and the network terminal, i.e. supports that a plurality of terminals may be attached to the same subscriber identity apparatus at the same time or in time division, and also supports that a plurality of subscriber identity apparatuses may be attached to one terminal. Therefore, the communication system realizes that each subscriber may use a plurality of network terminals with only one subscriber identity apparatus while the same terminal may be shared by a plurality of subscribers, which has an important application forecast.

The main ideas of the present invention are:
1. The communication between the subscriber identity apparatus and the communication terminal is realized through the wireless interface, which solves the problem that the subscriber identity apparatus in IC card mechanism needs to physically contact the terminal, realizes the physics architecture separation of the subscriber identity apparatus and the communication terminal, and supports the multiple-to-multiple attaching possibility of the communication terminals and the subscriber identity apparatuses in the physics architecture.
2. By improving the ability of the current terminal, the present invention may support that a plurality of subscriber identity apparatuses may be attached to one terminal, support the subscriber identity apparatuses able to conveniently choose to initiate a session, and support the session identification of different subscribers through the subscriber identity information such as the serial number carried in the session signaling from the network and support the notification messages transmission, which may differentiate the subscribers and are used to notify the users, for example, different ring tones are used to notify different subscribers.
3. By improving the ability of the current communication service network system, the present invention may support that one subscriber identity apparatus may be attached to a plurality of communication terminals at the same time, and support that one terminal may be attached to a plurality of subscriber identity apparatuses.
4. When a wireless link exists between the subscriber identity apparatus and the communication terminal, the present invention automatically realizes the attaching, and solves the problem that the attaching process needs to be manually performed for the subscriber identity apparatus and the communication terminal.

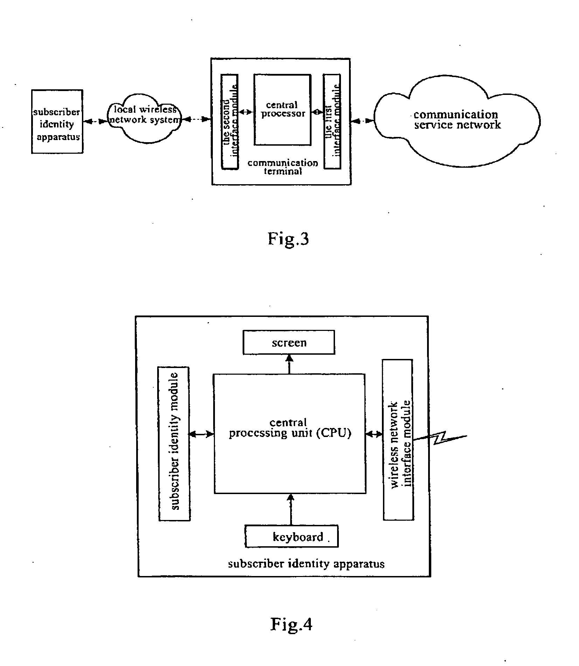

Figure 3 is the schematic diagram showing the architecture of the communication system according to an embodiment of the present invention. The communication system includes a communication service network, a local wireless network system, at least one communication terminal and at least one subscriber identity apparatus.

### 1. the subscriber identity apparatus:

As shown in Figure 4, the subscriber identity apparatus is a kind of subscriber identity apparatus using the wireless interface, which includes a subscriber identity module, a wireless network interface module, a central processing unit, a keyboard for inputting the control command and a screen for displaying the status information.

The subscriber identity module is used to store the subscriber identity information.

The wireless network interface module is used to connect to the local wireless network system.

The central processing unit is connected between the subscriber identity module and the wireless network interface module, and is used to realize the communication by the local wireless network system and the communication terminal and to send the identity information to the communication terminal.

The communication terminal with the wireless interface may access the information such as the subscriber's unique identity, key, cryptographic algorithm etc. in the subscriber identity apparatus through the local wireless network system.

In order to fully inherit the subscriber identity apparatus technology in the current mobile network, the subscriber identity module may be extendably added with a local wireless network interface and a corresponding input/output/communication processing function on the basis of the former SIM, USIM, ISIM (IP Multimedia Services Identity Module) defined by 3GPP, so that the subscriber identity module may have a local wireless network interface and the communication terminal may communicate with the subscriber identity apparatus through the local wireless network system. Therefore, the ID-1 SIM and Plug-in SIM generally used in the current mobile network may be continually used in the subscriber identity apparatus.

The communication terminal may be directly used as a subscriber identity apparatus. The subscriber identity information in the ID-1 SIM or Plug-in SIM of the mobile terminal may be provided to other communication terminals for use through the local wireless network system by adding a local wireless network interface to the mobile terminal with the ID-1 SIM or Plug-in SIM.

For the function of the synchronously initiated access from a plurality of communication terminals to a subscriber identity apparatus supported by the subscriber identity apparatus, a plurality of subscribers may be attached to different communication terminals respectively.

### 2. the communication terminal with a local wireless network interface

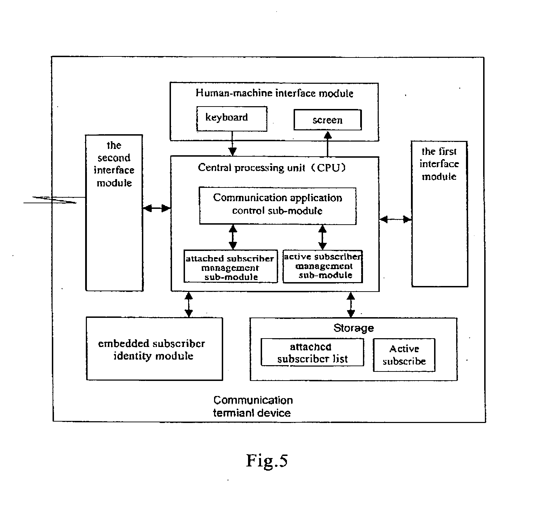

As Figure 5 shows the communication terminal using the method of the present invention has both a local wireless network interface and a current communication service network interface and has a function of communicating with the subscriber identity apparatus through the local wireless network interface.

The communication terminal may access different kinds of fixed and mobile communication service network systems through the communication service network interface, and supports the access technologies of GSM, GPRS, EDGE, 802.11, TDMA, FDMA, CDMA, WCDMA, Bluetooth, WiMAX, traditional analog telephone line, xDSL, Ethernet or point-to-point dedicated line and etc.

The communication terminal may be attached to a plurality of subscriber identity apparatuses at the same time, may be used by a plurality of subscribers at the same time and may provide different use interfaces and tones or lights for different subscribers. One of the implementation manners is that the registered subscriber subscribes the use interface and different tones or lights from the operator. The operator considers the subscribed information as the configuration parameter or Java program and stores the identity information corresponding to the subscriber in the subscriber home databases such as the HLR or HSS. The communication terminal may provide different human-machine interfaces for different subscribers by downloading the terminal configuration parameter or Java program from the subscriber home databases such as the HLR or HSS. Another implementation manner is that the subscribers sharing the same communication terminal set human-machine interfaces corresponding to themselves on the communication terminal respectively.

The communication terminal includes a communication application control sub-module, wherein the communication application control sub-module is connected with an attached subscriber management sub-module and an active subscriber management sub-module, which are responsible for the management of the attached subscriber and that of the active subscriber respectively.

The communication terminal further includes a storage module which stores the list of the successfully attached subscribers in the current terminal and the information of the subscribers in the active status. The attached subscriber list stores the relative information of the corresponding subscribers such as the subscriber identity information, subscriber communication identity information and the information that whether the subscriber has been successfully registered in the service network system.

One example of the subscriber information stored in the attached subscriber list is shown in Table 1:

**Table 1. list of the attached subscribers**

| Number | subscriber communication identity information | subscriber identity information | Name of the attached subscriber | Code of the indication tone | ··· ··· |
|---|---|---|---|---|---|
| 1 | subscriber communication identity 1 (1391*****28) | subscriber identity 1 | Zhang Cheng | 2 | ··· ··· |
| 2 | subscriber communication identity 2 (075528780808) | subscriber identity 2 | Liu Ming | 4 | ··· ··· |
| 3 | ··· ··· | | ··· ··· | ··· ··· | ··· ··· |

The communication terminal not only supports the subscriber identity apparatus connected through the local wireless network system, but also supports the subscriber identity identification mechanisms such as the embedded or inserted SIM, USIM card, or soft SIM, subscriber account number, line authentication and etc to identifying the user of the terminals. The communication terminal supports one of above identity identification mechanisms or their combinations.

### 3. the local wireless network system

The local wireless network system realizes the communication connection between the communication terminal and the subscriber identity apparatus through the second interface module of the communication terminal and the wireless network interface module of the subscriber identity apparatus.

The communication terminal and the subscriber identity apparatus perform the identity authentication attaching for a plurality of subscriber identities on communication terminals after connected to the local wireless network system.

The local wireless network system may be a local network which adopts the wireless technologies such as the WiFi (802.11), Bluetooth, 27Mhz or 900Mhz. Accordingly, the second interface module of the communication terminal and the wireless network interface module of the subscriber identity apparatus may also adopt the interface modules of WiFi, Bluetooth, 27Mhz or 900Mhz.

### 4. the communication service network system

The network system providing the communication service for the subscribers includes the 2G GSM, CDMA, 3G WCDMA, CDMA 2000 network in the mobile fields and the PSTN/ISDN, H.323, SIP, the network based on the soft switch and the network based on the separated control, carrier and service of IMS in the fixed line fields.

The communication service network system supports that a plurality of subscriber identity apparatuses may be attached to the same communication terminal and supports the corresponding operations such as the subscriber registration authentication, subscriber session routing, subscriber service accounting and etc. The communication service network system supports that a subscriber identity apparatus may be attached to a plurality of communication terminals simultaneously and supports the corresponding operations such as the subscriber registration authentication, subscriber session routing, subscriber service accounting and etc.

After the subscriber is registered and authenticated, the communication service network system needs to register the address information of the terminal currently attached by the registered subscriber and the communication identity information of the corresponding subscriber. If the registered subscriber is attached to a plurality of communication terminals simultaneously, accordingly, there are pieces of registered terminal address information and communication identity information of the corresponding subscriber. When the communication service network system processes the incoming call to the subscriber according to his communication identity information, if the communication identities corresponding to the subscriber are the same on a plurality of communication terminals, the call may be routed to all the communication terminals to which the subscriber is attached; and if the communication identities corresponding to the subscriber are different on a plurality of communication terminals, the call will be routed to the communication terminal corresponding to the communication identity information.

The method for attaching the subscriber identity apparatus to the communication terminal according to an embodiment of the present invention will be described in detail with reference to the subscriber identity apparatus, the communication terminal using the subscriber identity apparatus and the communication system.

A subscriber corresponding to a subscriber identity apparatus with a wireless interface needs to be attached to the communication terminal and successfully register to the communication service network system connected with the communication terminal before he is able to initiate a call or receive a call. The attaching process includes the following steps.

Step 1. The subscriber identity apparatus with a wireless interface detects a communication terminal with a local wireless network interface through the local wireless network system and establishes the communication transmission link.

In the detection mechanism, after the subscriber identity apparatus with a wireless interface enters a region covered by a new local wireless network system, it initiatively initiates a broadcast inquiry and then the communication terminal responds to this inquiry. The process specifically includes:
step a1: the subscriber identity apparatus sends a broadcast inquiry message carrying the subscriber identity apparatus address information through the local wireless network system.
step a2: the communication terminal receives the broadcast inquiry message through the local wireless network system, and returns a inquiry response message carrying the first address information of the communication terminal to the subscriber identity apparatus according to the subscriber identity apparatus address information, in which the first address information is allocated by the local wireless network system.
step a3: the subscriber identity apparatus establishes a communication transmission link with the communication terminal through the local wireless network system according to the first address information.

Alternatively, after the communication terminal with a local network wireless interface enters a region covered by a new local wireless network system, it initiatively broadcasts its address information to the subscriber identity apparatus with a wireless interface. The process specifically includes:
step b1: the communication terminal sends a broadcast inquiry message carrying the communication terminal address information through the local wireless network system.
step b2: the subscriber identity apparatus receives the broadcast inquiry message through the local wireless network system, and returns a inquiry response message carrying the subscriber identity apparatus address information to the communication terminal according to the first address information.
step b3: the communication terminal establishes a communication transmission link with the subscriber identity apparatus through the local wireless network system according to the subscriber identity apparatus address information.
Step 2: In order to guarantee the terminal will not be used by illegal subscribers, the communication terminal with a local network wireless interface may authenticate the subscriber identity apparatus with a wireless interface.

The authentication method may be the shared key authentication. When the subscriber identity apparatus is attached to a communication terminal for the first time, the shared key of the corresponding communication terminal needs to be inputted into the subscriber identity apparatus. If the shared key of the corresponding terminal has been already stored in the subscriber identity module, the automatic authentication may be started, which avoids the requirements to input the shared key again. In the subscriber identity apparatus with a wireless interface, the subscriber may add, delete and modify the shared key of the corresponding terminal.

Step 3: A reliable communication transmission link is established between the subscriber identity apparatus with a wireless interface and the communication terminal with a local network wireless interface through the local wireless network system.

After the communication transmission link between the subscriber identity apparatus and the communication terminal interrupts, which is caused by the reasons that the subscriber identity apparatus or the communication terminal leaves the region covered by the local wireless network system due to the the physical address change or the local wireless network system fails, the subscriber identity apparatus needs to be attached to the communication terminal again through step 1.

Step 4: After the subscriber identity apparatus with a wireless interface is successfully attached to the communication terminal with a local network wireless interface and the reliable communication transmission link is established, the communication terminal initiates a registration authentication process to the communication service network system for the subscriber corresponding to the attached subscriber identity apparatus.

The subscriber identity apparatus establishes the communication transmission link with two or more communication terminals at the same time or in time division, so that the two or more communication terminals obtain the subscriber identity information respectively, and the subscriber corresponding to the subscriber identity information is attached to two or more communication terminals simultaneously.

The communication terminal establishes the communication transmission link with two or more subscriber identity apparatuses at the same time or in time division, so that the two or more subscriber identity apparatuses obtain the subscriber identity information respectively from each subscriber identity apparatus and the subscriber corresponding to two or more subscriber identity apparatuses is attached to the communication terminal simultaneously.

The communication terminal supports one or more subscriber identity identification mechanisms such as the subscriber identity apparatus with a wireless interface, embedded or inserted SIM, USIM card, soft SIM, subscriber account number or line authentication etc. The communication terminal will select a default subscriber as use active status. Until the active status is changed to another subscriber, the session operations initiated from the terminal pertain to the default subscriber. If a subscriber corresponding to the subscriber identity apparatus with a wireless interface is not the one corresponding to the current use active status on this terminal, the terminal needs to perform the use active operations before a session is initiated by using the terminal, and the session initiation operations of a communication terminal in a period of a particular subscriber's use active status are dedicated to the subscriber identity apparatus that initiates the use activating operation. The terminal user may select some attached subscriber as a use active subscriber through the terminal interface operations. In order to avoid some illegal subscriber uses the terminal, the selection of the active subscriber by the terminal may adopt a certain authentication manner. Only those subscribers who have passed the authentication may perform the use active operation of specified subscribers. The authentication manner may require the subscriber to input the key to confirm the subscriber identity, and the key information on the terminal may be obtained when the subscriber is attached or registered to the network.

The initiating method through the subscriber identity apparatus with a wireless interface includes the steps of:
Step A: the subscriber initiates the active operation to the attached communication terminal through the wireless communication link by the subscriber identity apparatus with a wireless interface.
   The specific operation may be that the subscriber tabs some hot key on the subscriber identity apparatus and triggers the use activating operation for the attached communication terminal. For simplifying the subscriber operation, the subscriber may implement the use activating operation for all the attached communication terminals of the subscriber identity apparatus, and practically, the subscriber may select a certain attached communication terminal and implement the use activating operation.
Step B: after receiving a use active operation command from some subscriber identity apparatus with a wireless interface, the communication terminal with a local wireless network interface enters the subscriber use activated status corresponding to the subscriber identity apparatus. In such case, all the initiated sessions belong to the subscriber corresponding to the subscriber identity apparatus.

The communication terminal may provide different subscribers with different use interfaces according to the terminal configuration data downloaded from the subscriber home database in the communication service network for their use activated statuses, for example, the communication terminal displays the information such as the current subscriber name to differentiate different subscribers. When a specific subscriber identity apparatus activates the terminal to enter the use activated status of a specific subscriber, if it does not initiate session operations during a certain period, it will be switched to the use active status of the default subscriber of the communication terminal. When a specific subscriber identity apparatus activates the terminal to enter use activated status of the specific subscriber and is not in the use status, if there is a new subscriber identity apparatus initiating the use activating operation, the subscriber identity apparatus which initiates the use activating operation latterly will have priority, and the terminal enters the use activated status of the subscriber managed by the subscriber identity apparatus which initiates the use activating operation latterly.

The communication control method with the communication terminal will be described in detail with reference to the method for attaching the subscriber identity apparatus to the communication terminal according to an embodiment of the present invention.

When the communication terminal obtains the subscriber identity information from the subscriber identity apparatus and attaches the subscriber corresponding to the subscriber identity information through the local wireless network system, it may support that one or more subscribers share the communication terminal and control the communication by the communication terminal. The process is as follows:
Step 1': the communication terminal sends a registration request to the communication service network, which carries the subscriber identity information, the communication identity information corresponding to the subscriber allocated by the communication service network and the second address information of the communication terminal allocated by the communication service network.
Step 2': the communication service network records the subscriber identity information, the communication identity information corresponding to the subscriber and the second address information of the communication terminal correspondingly, and processes the communication of the subscriber corresponding to the subscriber identity information according to the correspondence between the communication identity information corresponding to the subscriber and the second address information of the communication terminal.

When the communication terminal receives a session request from the network, it matches the corresponding called subscriber and notifies the subscriber. The specific process is as follows:
Step 21': the communication terminal obtains the called subscriber's identity according to the communication identity information or the identity information of the called subscriber in the session request signaling from the network.

When the subscriber corresponding to a subscriber identity is attached to two or more communication terminals simultaneously, the communication service network records the second address information of the two or more communication terminals and the communication identity information corresponding to the subscriber according to communication identity information of the subscriber; and the communication service network connects the incoming call carrying the subscriber's communication identity information to the corresponding communication terminal according to the communication identity information of the called subscriber whose session is ended by the subscriber and the second address information of the communication terminal.

When the subscriber corresponding to the subscriber identity information has the same communication identity information on two or more communication terminals, the communication service network connects the incoming call carrying the subscriber's communication identity information to a plurality of corresponding communication terminals according to the communication identity information of called subscriber whose session is ended by the subscriber and the second address information of a plurality of corresponding communication terminals.

When two or more subscribers corresponding to the above subscriber identity information are attached to the same communication terminal simultaneously, before the outgoing call is initiated, one of the attached subscribers is set to be the active subscriber and then the outgoing call is initiated, wherein the outgoing call carries the communication identity information of the active subscriber.

The outgoing call represents a call initiated from this terminal and the incoming call represents a call terminated at this terminal.

Preferably, one of the attached subscribers may be set to be the default active subscriber.

When a subscriber corresponding to the subscriber identity information of a subscriber identity apparatus is a non-active subscriber, the method to set the subscriber as an active subscriber includes the steps of:
An active instruction is sent to the communication terminal through the subscriber identity apparatus and the active instruction includes the subscriber identity information. The communication terminal receives the active instruction and sets the corresponding subscriber as an active subscriber.

Alternatively, the subscriber selects one of the corresponding attached subscribers as an active subscriber through the operation of the human-machine interface module of the communication terminal. The communication terminal sets the corresponding attached subscriber as an active subscriber according to the active operation instruction of the subscriber.

Preferably, the subscriber identity is authenticated on a communication terminal according to the password inputted by the subscriber. The password is downloaded through the communication service network system when the corresponding subscriber is performing the registration.

When two or more subscribers corresponding to the subscriber identity information are attached to the same communication terminal, the communication terminal sets different use-interface and/or indication information for each corresponding subscriber.

Step 22': the communication terminal searches in the registered active subscribers in the attached subscriber list stored in the terminal for whether there is an subscriber who corresponds to the identity of the called subscriber in the session request from the network, if there is no matching subscribers, the session request from the network will not be processed; if there is a matching subscriber, the procedure proceeds to step 203.

Step 203: the communication terminal sends a notification in the form of the set information that may differentiate the called subscriber of the session request from the network, specifically the indication information such as the different tones, lights, texts or graphs specified for the called subscriber. One implementation manner is to download the configuration parameters or Java programs from the subscriber home databases such as the HLR or HSS so as to provide different subscribers with different human-machine interfaces.

The human interface and/or indication information are stored at the service network side and are downloaded to the local place by the communication terminal from the service network side when the corresponding subscriber registers at the service network. Or the human interface and/or indication information are set on the local communication terminals.

## Claims

1. A communication terminal comprising a central processor and a first interface module for accessing a communication service network, **characterised in that**, the communication terminal further comprises: a second interface module for accessing a local wireless network system, wherein
the central processor is adapted to receive a broadcast inquiry initiated by a subscriber identity apparatus after the subscriber identity apparatus enters a region covered by the local wireless network system, respond to the broadcast inquiry and establish communication transmission link with the subscriber identity apparatus, obtain subscriber identity information through the second interface module, attach a subscriber corresponding to the subscriber identity information, and the central processor is also adapted to send a registration request to the communication service network, which carries the subscriber identity information, communication identity information corresponding to the subscribers allocated by the communication service network and second address information of the communication terminal allocated by the communication service network, such that the communication terminal performs registration authentication process to the communication service network system for the subscribers, and make the corresponding subscriber communicate with the communication service network through the first interface module and realize communication.

2. The communication terminal according to claim 1, wherein the central processor is further adapted to establish the communication transmission links with two or more subscriber identity apparatuses at the same time or in time division, and attach two or more subscribers corresponding to the subscriber identity information simultaneously after the communication terminal respectively obtains the subscriber identity information stored in each subscriber identity apparatus through the second interface module.

3. The communication terminal according to claim 2, wherein
when an outgoing call is initiated, one of the attached subscribers is set to be an active subscriber and the outgoing call is adapted to carry the communication identity information of the active subscriber.

4. The communication terminal according to claim 2, wherein
when two or more subscribers are attached to a same communication terminal, the communication terminal is configured to set different interfaces and/or indication information for appropriate subscribers.

5. The communication terminal according to claim 1, wherein
the communication terminal further comprises an embedded subscriber identity card for storing the subscriber identity information;
the central processor is further adapted to read the subscriber identity information stored in the embedded subscriber identity card and attach a subscriber corresponding to the subscriber identity information.

6. The communication terminal according to claim 5, wherein the embedded subscriber identity card is a SIM card, a USIM card or an ISIM card.

7. The communication terminal according to claim 1, wherein the communication terminal is adapted to support authentication of the user's subscriber identity through soft SIM, subscriber account number or line authentication.

8. The communication terminal according to claim 1, wherein the communication terminal further comprises a storage for storing the identity information of the attached subscriber and a human-machine interface module, connected to the central processor, for performing human machine interaction.

9. The communication terminal according to claim 8, wherein the central processor comprises:
a communication application control sub-module for controlling the communication;
an attached subscriber management sub-module connected between the communication application control sub-module and the storage or the embedded subscriber identity card, for managing an attached subscriber list;
an active subscriber management sub-module connected between the communication application control sub-module and the storage or the embedded subscriber identity card, for setting one of the attached subscribers as an active subscriber for the communication and storing it in the storage.

10. A subscriber identity apparatus for a communication terminal which is connected to a local wireless network system, comprising:
a subscriber identity module, adapted to store subscriber identity information;
a wireless network interface module, adapted to access the local wireless network system;
a central processing unit connected between the subscriber identity module and the wireless network interface module, adapted to control the subscriber identity apparatus to establish communication through the wireless network system with the communication terminal and send the identity information to the communication terminal,
wherein steps of the central processing unit establishing communication through the wireless network system with the communication terminal comprises:
initiating a broadcast inquiry to the communication terminal after the subscriber identity apparatus enters a region covered by the local wireless network system;
receiving a response to the broadcast inquire sent by the communication terminal, and establishing the communication transmission link with the communication terminal.

11. A communication system comprising a communication service network, at least one communication terminal and at least one subscriber identity apparatus and a local wireless network system for realizing communication between the communication terminal and the subscriber identity apparatus, **characterised in that**, the communication terminal is a terminal according to any one of the claims 1 to 8, and the subscriber identity apparatus is an apparatus according to the claim 10.

12. A communication control method of a communication terminal for obtaining subscriber identity information from subscriber identity apparatuses through a local wireless network system and attaching subscribers corresponding to the subscriber identity information, **characterised in that**,
the subscriber identity apparatus initiates a broadcast inquiry to the communication terminal after the subscriber identity apparatus enters a region covered by the local wireless network system; the communication terminal responds to the broadcast inquiry and establishes communication transmission link with the subscriber identity apparatus;
the communication terminal obtains subscriber identity information from the subscriber identity apparatus through the local wireless network system, attaches a subscriber corresponding to the subscriber identity information;
the communication terminal sends a registration request to a communication service network, which carries the subscriber identity information, communication identity information corresponding to the subscribers allocated by the communication service network and second address information of the communication terminal allocated by the communication service network, such that the communication terminal performs registration authentication process to the communication service network system for the subscribers;
the communication service network correspondingly records subscriber identity information, the communication identity information corresponding to the subscribers and the second address information of the communication terminal, and processes communication of the subscriber corresponding to the subscriber identity information according to the correspondence between the communication identity information of the subscriber and the second address information of the communication terminal.

13. The communication control method according to claim 12, wherein steps of the subscriber identity apparatuses initiates a broadcast inquiry, the communication terminal responds to the broadcast inquiry and establishes the communication transmission link with the subscriber identity apparatus, the communication terminal obtains the subscriber identity information from the subscriber identity apparatus through the local wireless network system and attaching a subscriber corresponding to the subscriber identity information further comprises the following steps:
sending the broadcast inquiry message carrying address information of the subscriber identity apparatus through the local wireless network system by the subscriber identity apparatus,
receiving the broadcast inquiry message through the local wireless network system, and returning the response message carrying first address information of the communication terminal to the subscriber identity apparatus according to the address information of the subscriber identity apparatus by the communication terminal, wherein the first address information is allocated by the local wireless network system,
establishing the communication transmission link through the local wireless network system with the communication terminal by the subscriber identity apparatus according to the first address information,
obtaining the subscriber identity information through the communication transmission link and attaching the subscriber corresponding to the subscriber identity information by the communication terminal.

14. The communication control method according to claim 12, wherein the communication terminal establishes the communication transmission link with the subscriber identity apparatus, the communication terminal obtains subscriber identity information from the subscriber identity apparatus through the local wireless network system, attaches a subscriber corresponding to the subscriber identity information comprises:
establishing the communication transmission links with two or more subscriber identity apparatuses at the same time or in time division by the communication terminal;
attaching two or more subscriber corresponding to the two or more subscriber identity apparatuses to the communication terminal simultaneously after the communication terminal respectively obtains the subscriber identity information stored in each subscriber identity apparatus.

15. The communication control method according to claim 12, further comprising the steps of:
performing authentication for the subscriber identity apparatus and establishing the communication transmission link with the successfully authenticated subscriber identity apparatus by the communication terminal, when the communication transmission link is established between the communication terminal and the subscriber identity apparatus.

16. The communication control method according to claim 15, wherein
the communication terminal authenticates the subscriber identity apparatus by using a key that is preset in the communication terminal.

17. The communication control method according to claim 12, wherein
when the communication transmission link between the subscriber identity apparatus and the communication terminal is interrupted, the communication terminal detaches a subscriber corresponding to a subscriber identity module.

18. The communication control method according to claim 12, further comprising the steps of: reading the subscriber identity information from an embedded SIM card and attaching the corresponding subscriber by the communication terminal.

19. The communication control method according to claim 14, further comprising the steps of:
when two or more subscribers are attached to a same communication terminal, before an outgoing call is initiated, setting one of the attached subscribers to be an active subscriber and initiating the outgoing call, wherein the call carries the communication identity information of the active subscriber.

20. The communication control method according to claim 19, wherein
when a subscriber corresponding to the subscriber identity information of a subscriber identity apparatus is a non-active subscriber, the step of setting the subscriber to be a active subscriber comprises the steps of:
sending an active instruction comprising the subscriber identity information to the communication terminal through the subscriber identity apparatus,
receiving the active instruction and setting a corresponding subscriber to be an active subscriber by the communication terminal; or
selecting one of the correspondingly attached subscribers as an active subscriber through an operation of a human-machine interface module of the communication terminal by a subscriber, setting the corresponding attached subscriber to be an active subscriber according to the active operation instruction of the subscriber by the communication terminal.

21. The communication control method according to claim 20, wherein when the subscriber sets the subscriber to be an active subscriber through the communication terminal, further comprising the steps of:
the subscriber is authenticated, by the communication terminal, according to the corresponding subscriber password inputted by the subscriber.

22. The communication control method according to claim 21, wherein the subscriber password is downloaded from the communication service network system when the corresponding subscriber registers the subscriber password.

23. The communication control method according to claim 14, wherein when two or more subscribers corresponding to the subscriber identity information are attached to the same communication terminal, the communication terminal sets different interfaces and/or indication information for appropriate subscribers.

24. The communication control method according to claim 23, further comprising:
when the communication terminal receives an incoming call carrying the communication identity information of a subscriber, determining whether there is a corresponding attached subscriber, if yes, connecting the incoming call and indicating the subscriber with corresponding indication information; otherwise, refusing to return a response.

25. The communication control method according to claim 24, wherein
the subscriber interface and/or indication information are stored correspondingly at the service network side and are-downloaded to the local place by the communication terminal from the service network side when a corresponding subscriber is registering at the service network; or
the subscriber interface and/or indication information are set in the local communication terminal.

## Patentansprüche

1. Kommunikationsendgerät aufweisend einen zentralen Prozessor und ein erstes Schnittstellenmodul zum Zugreifen zu einem Kommunikationsservice-Netzwerk,
**dadurch gekennzeichnet, dass** das Kommunikationsendgerät weiterhin aufweist:
ein zweites Schnittstellenmodul zum Zugreifen zu einem lokalen drahtlosen Netzwerksystem, bei dem
der zentrale Prozessor ausgebildet ist zum Empfangen einer Rundfunkanfrage, die durch ein Teilnehmeridentitätsgerät initiiert wurde, nachdem das Teilnehmeridentitätsgerät in einen Bereich eintritt, der durch das lokale drahtlose Netzwerksystem abgedeckt ist, Antworten auf die Rundfunkanfrage und Herstellen einer Kommunikationsübertragungsverbindung mit dem Teilnehmeridentitätsgerät, Erhalten von Teilnehmeridentitätsinformationen über das zweite Schnittstellenmodul, Anfügen eines Teilnehmers entsprechend den Teilnehmeridentitätsinformationen, und der zentrale Prozessor auch ausgebildet ist zum Senden einer Registrierungsanforderung zu dem Kommunikationsservice-Netzwerk, welche die Teilnehmeridentitätsinformationen, Kommunikationsidentitätsinformationen entsprechend den durch das Kommunikationsservice-Netzwerk zugewiesenen Teilnehmern und zweite Adresseninformationen des durch das Kommunikationsservice-Netzwerk zugewiesenen Kommunikationsendgeräts trägt, derart, dass das Kommunikationsendgerät einen Registrierungsberechtigungsvorgang zu dem Kommunikationsservice-Netzwerksystem für die Teilnehmer durchführt und bewirkt, dass der entsprechende Teilnehmer mit dem Kommunikationsservice-Netzwerk über das erste Schnittstellenmodul kommuniziert und eine Kommunikation realisiert.

2. Kommunikationsendgerät nach Anspruch 1, bei dem der zentrale Prozessor weiterhin ausgebildet ist zum Herstellen der Kommunikationsübertragungsverbindungen mit zwei oder mehr Teilnehmeridentitätsgeräten gleichzeitig oder in Zeitteilung, und zum gleichzeitigen Anfügen von zwei oder mehr Teilnehmern entsprechend den Teilnehmeridentitätsinformationen, nachdem das Kommunikationsendgerät jeweils die in jedem Teilnehmeridentitätsgerät gespeicherten Teilnehmeridentitätsinformationen über das zweite Schnittstellenmodul erhalten hat.

3. Kommunikationsendgerät nach Anspruch 2, bei dem,
wenn ein herausgehender Ruf initiiert ist, einer der angefügten Teilnehmer so gesetzt wird, dass er ein aktiver Teilnehmer ist, und der herausgehende Ruf ausgebildet ist, die Kommunikationsidentitätsinformationen des aktiven Teilnehmers zu tragen.

4. Kommunikationsendgerät nach Anspruch 2, bei dem,
wenn zwei oder mehr Teilnehmer an dasselbe Kommunikationsendgerät angefügt sind, das Kommunikationsendgerät ausgebildet ist, verschiedene Schnittstellen und/oder Anzeigeinformationen für zweckmäßige Teilnehmer zu setzen.

5. Kommunikationsendgerät nach Anspruch 1, bei dem
das Kommunikationsendgerät weiterhin eine eingebettete Teilnehmeridentitätskarte zum Speichern der Teilnehmeridentitätsinformationen aufweist;
der zentrale Prozessor weiterhin ausgebildet ist zum Lesen der in der eingebetteten Teilnehmeridentitätskarte gespeicherten Teilnehmeridentitätsinformationen und zum Anfügen eines Teilnehmers entsprechend den Teilnehmeridentitätsinformationen.

6. Kommunikationsendgerät nach Anspruch 5, bei dem
die eingebettete Teilnehmeridentitätskarte eine SIM-Karte, eine USIM-Karte oder eine ISIM-Karte ist.

7. Kommunikationsendgerät nach Anspruch 1, bei dem
das Kommunikationsendgerät ausgebildet ist zum Stützen einer Berechtigung der Teilnehmeridentität des Benutzers durch Soft-SIM, Teilnehmerkontonummer oder Leitungsberechtigung.

8. Kommunikationsendgerät nach Anspruch 1, bei dem
das Kommunikationsendgerät weiterhin einen Speicher zum Speichern der Identitätsinformationen des angefügten Teilnehmers und ein Mensch/Maschine-Schnittstellenmodul, das mit dem zentralen Prozessor verbunden ist, für die Durchführung einer Mensch/Maschine-Interaktion aufweist.

9. Kommunikationsendgerät nach Anspruch 8, bei dem der zentrale Prozessor aufweist:
ein Kommunikationsanwendungssteuer-Submodul zum Steuern der Kommunikation;
ein Submodul für die Verwaltung eines angefügten Teilnehmers, das zwischen das Kommunikationsanwendungssteuer-Submodul und den Speicher oder die eingebettete Teilnehmeridentitätskarte geschaltet ist, um eine Liste für einen angefügten Teilnehmer zu verwalten;
ein Submodul für die Verwaltung eines aktiven Teilnehmers, das zwischen das Kommunikationsanwendungssteuer-Submodul und den Speicher oder die eingebettete Teilnehmeridentitätskarte geschaltet ist, zum Setzen eines der angefügten Teilnehmer als einen aktiven Teilnehmer für die Kommunikation und Speichern von diesem in dem Speicher.

10. Teilnehmeridentitätsgerät für ein Kommunikationsendgerät, das mit einem lokalen drahtlosen Netzwerksystem verbunden ist, welches aufweist:
ein Teilnehmeridentitätsmodul, das ausgebildet ist zum Speichern von Teilnehmeridentitätsinformationen;
ein Schnittstellenmodul für das drahtlose Netzwerk, das ausgebildet ist zum Zugreifen zu dem lokalen drahtlosen Netzwerksystem;
eine zentrale Verarbeitungseinheit, die zwischen das Teilnehmeridentitätsmodul und das Schnittstellenmodul für das drahtlose Netzwerk geschaltet ist, ausgebildet zum Steuern des Teilnehmeridentitätsgeräts, um eine Kommunikation über das drahtlose Netzwerksystem mit dem Kommunikationsendgerät herzustellen und die Identitätsinformationen zu dem Kommunikationsendgerät zu senden,
wobei Schritte der zentralen Verarbeitungseinheit, die eine Kommunikation über das drahtlose Netzwerksystem mit dem Kommunikationsendgerät herstellt, aufweisen:
Initiieren einer Rundfunkanfrage zu dem Kommunikationsendgerät, nachdem das Teilnehmeridentitätsgerät in einen Bereich eintritt, der von dem lokalen drahtlosen Netzwerksystem abgedeckt ist;
Empfangen einer Antwort auf die Rundfunkanfrage, die von dem Kommunikationsendgerät gesendet wurde, und Herstellen der Kommunikationsübertragungsverbindung mit dem Kommunikationsendgerät.

11. Kommunikationssystem, das ein Kommunikationsservice-Netzwerk, zumindest ein Kommunikationsendgerät und zumindest ein Teilnehmeridentitätsgerät und ein lokales drahtloses Netzwerksystem zum Realisieren einer Kommunikation zwischen dem Kommunikationsendgerät und dem Teilnehmeridentitätsgerät aufweist,
**dadurch gekennzeichnet, dass** das Kommunikationsendgerät ein Endgerät gemäß einem der Ansprüche 1 bis 8 ist und das Teilnehmeridentitätsgerät ein Gerät gemäß dem Anspruch 10 ist.

12. Kommunikationssteuerverfahren eines Kommunikationsendgeräts zum Erhalten von Teilnehmeridentitätsinformationen von Teilnehmeridentitätsgeräten über ein lokales drahtloses Netzwerksystem und zum Anfügen von Teilnehmern entsprechend den Teilnehmeridentitätsinformationen,
**dadurch gekennzeichnet, dass**
das Teilnehmeridentitätsgerät eine Rundfunkanfrage zu dem Kommunikationsendgerät initiiert, nachdem das Teilnehmeridentitätsgerät in einen Bereich eingetreten ist, der durch das lokale drahtlose Netzwerksystem abgedeckt wird;
das Kommunikationsendgerät auf die Rundfunkanfrage antwortet und eine Kommunikationsübertragungsverbindung mit dem Teilnehmeridentitätsgerät herstellt;
das Kommunikationsendgerät Teilnehmeridentitätsinformationen von dem Teilnehmeridentitätsgerät über das lokale drahtlose Netzwerksystem erhält, einen Teilnehmer entsprechend den Teilnehmeridentitätsinformationen anfügt;
das Kommunikationsendgerät eine Registrierungsanforderung zu einem Kommunikationsservice-Netzwerk sendet, die die Teilnehmeridentitätsinformationen, Kommunikationsidentitätsinformationen entsprechend den durch das Kommunikationsservice-Netzwerk zugewiesenen Teilnehmern und zweite Adresseninformationen des durch das Kommunikationsservice-Netzwerk zugewiesenen Kommunikationsendgeräts trägt, derart, dass das Kommunikationsendgerät einen Registrierungsberechtigungsvorgang zu dem Kommunikationsservice-Netzwerksystem für die Teilnehmer durchführt;
das Kommunikationsservice-Netzwerk entsprechend Teilnehmeridentitätsinformationen, die Kommunikationsidentitätsinformationen entsprechend den Teilnehmern und die zweiten Adresseninformationen des Kommunikationsendgeräts aufzeichnet und eine Kommunikation des Teilnehmers entsprechend den Teilnehmeridentitätsinformationen gemäß der Entsprechung zwischen den Kommunikationsidentitätsinformationen des Teilnehmers und den zweiten Adresseninformationen des Kommunikationsendgeräts verarbeitet.

13. Kommunikationssteuerverfahren nach Anspruch 12, bei dem
Schritte der Teilnehmeridentitätsgeräte eine Rundfunkanfrage initiieren, das Kommunikationsendgerät auf die Rundfunkanfrage antwortet und die Kommunikationsübertragungsverbindung mit dem Teilnehmeridentitätsgerät herstellt, das Kommunikationsendgerät die Teilnehmeridentitätsinformationen von dem Teilnehmeridentitätsgerät über das lokale drahtlose Netzwerksystem erhält und einen Teilnehmer entsprechend den Teilnehmeridentitätsinformationen anfügt, und weiterhin die folgenden Schritte aufweist:
Senden der Rundfunkanfragenachricht, die Adresseninformationen des Teilnehmeridentitätsgeräts trägt, durch das Teilnehmeridentitätsgerät über das lokale drahtlose Netzwerksystem,
Empfangen der Rundfunkanfragenachricht über das lokale drahtlose Netzwerksystem und Zurückgeben der Antwortnachricht, die erste Adresseninformationen des Kommunikationsendgeräts trägt, zu dem Teilnehmeridentitätsgerät gemäß den Adresseninformationen des Teilnehmeridentitätsgeräts durch das Kommunikationsendgerät, wobei die ersten Adresseninformationen durch das lokale drahtlose Netzwerksystem zugewiesen sind,
Herstellen der Kommunikationsübertragungsverbindung über das lokale drahtlose Netzwerksystem mit dem Kommunikationsendgerät durch das Teilnehmeridentitätsgerät gemäß den ersten Adresseninformationen,
Erhalten der Teilnehmeridentitätsinformationen über die Kommunikationsübertragungsverbindung und Anfügen des Teilnehmers entsprechend den Teilnehmeridentitätsinformationen durch das Kommunikationsendgerät.

14. Kommunikationssteuerverfahren nach Anspruch 12, bei dem das Kommunikationsendgerät die Kommunikationsübertragungsverbindung mit dem Teilnehmeridentitätsgerät herstellt, das Kommunikationsendgerät Teilnehmeridentitätsinformationen von dem Teilnehmeridentitätsgerät über das lokale drahtlose Netzwerksystem erhält, einen Teilnehmer entsprechend den Teilnehmeridentitätsinformationen anfügt, das aufweist:
Herstellen der Kommunikationsübertragungsverbindungen mit zwei oder mehr Teilnehmeridentitätsgeräten zur gleichen Zeit oder in Zeitteilung durch das Kommunikationsendgerät;
Anfügen von zwei oder mehr Teilnehmern entsprechend den zwei oder mehr Teilnehmeridentitätsgeräten gleichzeitig zu dem Kommunikationsendgerät, nachdem das Kommunikationsendgerät jeweils die Teilnehmeridentitätsinformationen erhalten hat, die in jedem Teilnehmeridentitätsgerät gespeichert sind.

15. Kommunikationssteuerverfahren nach Anspruch 12, welches weiterhin die Schritte aufweist:
Durchführen einer Berechtigungsprüfung für das Teilnehmeridentitätsgerät und Herstellen der Kommunikationsübertragungsverbindung mit dem erfolgreich berechtigten Teilnehmeridentitätsgerät durch das Kommunikationsendgerät, wenn die Kommunikationsübertragungsverbindung zwischen dem Kommunikationsendgerät und dem Teilnehmeridentitätsgerät hergestellt ist.

16. Kommunikationssteuerverfahren nach Anspruch 15, bei dem das Kommunikationsendgerät die Berechtigung des Teilnehmeridentitätsgeräts erteilt durch Verwendung eines Schlüssels, der in dem Kommunikationsendgerät voreingestellt ist.

17. Kommunikationssteuerverfahren nach Anspruch 12, bei dem,
wenn die Kommunikationsübertragungsverbindung zwischen dem Teilnehmeridentitätsgerät und dem Kommunikationsendgerät unterbrochen ist, das Kommunikationsendgerät einen Teilnehmer entsprechend einem Teilnehmeridentitätsmodul löst.

18. Kommunikationssteuerverfahren nach Anspruch 12, weiterhin aufweisend die Schritte:
Lesen der Teilnehmeridentitätsinformationen aus einer eingebetteten SIM-Karte und Anfügen des entsprechenden Teilnehmers durch das Kommunikationsendgerät.

19. Kommunikationssteuerverfahren nach Anspruch 14, weiterhin aufweisend die Schritte:
wenn zwei oder mehr Teilnehmer an dasselbe Kommunikationsendgerät angefügt sind, Setzen, bevor ein ausgehender Ruf initiiert wird, eines der angefügten Teilnehmer als einen aktiven Teilnehmer und Initiieren des ausgehenden Rufs, wobei der Ruf die Kommunikationsidentitätsinformationen des aktiven Teilnehmers trägt.

20. Kommunikationssteuerverfahren nach Anspruch 19, bei dem,
wenn ein Teilnehmer entsprechend den Teilnehmeridentitätsinformationen eines Teilnehmeridentitätsgerätes ein nichtaktiver Teilnehmer ist, der Schritt des Setzens des Teilnehmers als einen aktiven Teilnehmer die Schritte aufweist:
Senden eines aktiven Befehls, der die Teilnehmeridentitätsinformationen aufweist, über das Teilnehmeridentitätsgerät zu dem Kommunikationsendgerät,
Empfangen des aktiven Befehls und Setzen eines entsprechenden Teilnehmers als einen aktiven Teilnehmer durch das Kommunikationsendgerät; oder
Auswählen eines der entsprechend angefügten Teilnehmer als einen aktiven Teilnehmer durch eine Operation eines Mensch/Maschine-Schnittstellenmoduls des Kommunikationsendgeräts durch einen Teilnehmer,
Setzen des entsprechenden angefügten Teilnehmers als einen aktiven Teilnehmer gemäß dem aktiven Operationsbefehl des Teilnehmers durch das Kommunikationsendgerät.

21. Kommunikationssteuerverfahren nach Anspruch 20, bei dem, wenn der Teilnehmer den Teilnehmer als einen aktiven Teilnehmer über das Kommunikationsendgerät setzt, weiterhin die Schritte gegeben sind:
der Teilnehmer wird durch das Kommunikationsendgerät berechtigt gemäß dem entsprechenden, durch den Teilnehmer eingegebenen Teilnehmerpasswort.

22. Kommunikationssteuerverfahren nach Anspruch 21, bei dem das Teilnehmerpasswort von dem Kommunikationsservice-Netzwerksystem heruntergeladen wird, wenn der entsprechende Teilnehmer das Teilnehmerpasswort registriert.

23. Kommunikationssteuerverfahren nach Anspruch 14, bei dem, wenn zwei oder mehr Teilnehmer entsprechend den Teilnehmeridentitätsinformationen an dasselbe Kommunikationsendgerät angefügt sind, das Kommunikationsendgerät verschiedene Schnittstellen und/oder Anzeigeinformationen für zweckmäßige Teilnehmer setzt.

24. Kommunikationssteuerverfahren nach Anspruch 23, welches weiterhin aufweist:
wenn das Kommunikationsendgerät einen eintreffenden Ruf empfängt, der die Kommunikationsidentitätsinformationen eines Teilnehmers trägt, Bestimmen, ob ein entsprechender angefügter Teilnehmer vorhanden ist, wenn ja, Verbinden des eintreffenden Rufs und Anzeigen des Teilnehmers mit entsprechenden Anzeigeinformationen; anderenfalls Zurückweisen der Zurückgabe einer Antwort.

25. Kommunikationssteuerverfahren nach Anspruch 24, bei dem
die Teilnehmerschnittstelle und/oder Anzeigeinformationen entsprechend auf der Servicenetzwerkseite gespeichert sind und zu der lokalen Stelle durch das Kommunikationsendgerät von der Servicenetzwerkseite herunter geladen werden, wenn ein entsprechender Teilnehmer bei dem Servicenetzwerk registriert wird; oder
die Teilnehmerschnittstelle und/oder Anzeigeinformationen in dem lokalen Kommunikationsendgerät gesetzt werden.

## Revendications

1. Terminal de communication comprenant un processeur central et un premier module d'interface pour accéder à un réseau de service de communication, **caractérisé en ce que** le terminal de communication comprend en outre un deuxième module d'interface pour accéder à un système de réseau sans fil local, dans lequel
le processeur central est apte à recevoir une interrogation de diffusion lancée par un appareil d'identité d'abonné après que l'appareil d'identité d'abonné soit entré dans une région couverte par le système de réseau sans fil local, répondre à l'interrogation de diffusion et établir une liaison de transmission de communication avec l'appareil d'identité d'abonné, obtenir des informations d'identité d'abonné à travers le deuxième module d'interface, rattacher un abonné correspondant aux informations d'identité d'abonné, et le processeur central est également apte à envoyer une demande d'enregistrement au réseau de service de communication, qui porte les informations d'identité d'abonné, des informations d'identité de communication correspondant aux abonnés allouées par le réseau de services de communication et des deuxièmes informations d'adresse du terminal de communication allouées par le réseau de service de communication, de sorte que le terminal de communication effectue un processus d'authentification d'enregistrement sur le système de réseau de service de communication pour les abonnés, et mette l'abonné correspondant en communication avec le réseau de service de communication à travers le premier module d'interface et établisse la communication.

2. Terminal de communication selon la revendication 1, dans lequel le processeur central est en outre apte à établir les liaisons de transmission de communication avec deux ou plus d'appareils d'identité d'abonné en même temps ou en division de temps, et rattacher deux ou plus d'abonnés correspondant aux informations d'identité d'abonné simultanément après que le terminal de communication a respectivement obtenu les informations d'identité d'abonné stockées dans chaque appareil d'identité d'abonné à travers le deuxième module d'interface.

3. Terminal de communication selon la revendication 2, dans lequel
lorsqu'un appel sortant est initié, l'un des abonnés rattachés est réglé pour être un abonné actif et l'appel sortant est apte à porter les informations d'identité de communication de l'abonné actif.

4. Terminal de communication selon la revendication 2, dans lequel
lorsque deux ou plus d'abonnés sont rattachés à un même terminal de communication, le terminal de communication est configuré pour régler différentes interfaces et/ou informations d'indication pour des abonnés appropriés.

5. Terminal de communication selon la revendication 1, dans lequel
le terminal de communication comprend en outre une carte d'identité d'abonné intégrée pour stocker les informations d'identité d'abonné ;
le processeur central est en outre apte à lire les informations d'identité d'abonné stockées dans la carte d'identité d'abonné intégrée et rattacher un abonné correspondant aux informations d'identité d'abonné.

6. Terminal de communication selon la revendication 5, dans lequel la carte d'identité d'abonné intégrée est une carte SIM, une carte USIM ou une carte ISIM.

7. Terminal de communication selon la revendication 1, dans lequel le terminal de communication est apte à prendre en charge l'authentification de l'identité d'abonné de l'utilisateur à travers un SIM souple, un numéro de compte d'abonné ou une authentification de ligne.

8. Terminal de communication selon la revendication 1, dans lequel le terminal de communication comprend en outre une mémoire pour stocker les informations d'identité de l'abonné rattaché et un module d'interface homme-machine, connecté au processeur central, pour effectuer une interaction homme-machine.

9. Terminal de communication selon la revendication 8, dans lequel le processeur central comprend :
un sous-module de commande d'application de communication pour commander la communication ;
un sous-module de gestion d'abonné rattaché connecté entre le sous-module de commande d'application de communication et la mémoire ou la carte d'identité d'abonné intégrée, pour gérer une liste d'abonnés rattachés ;
un sous-module de gestion d'abonné actif connecté entre le sous-module de commande d'application de communication et la mémoire ou la carte d'identité d'abonné intégrée, pour régler l'un des abonnés rattachés en tant qu'abonné actif pour la communication et le stocker dans la mémoire.

10. Appareil d'identité d'abonné pour un terminal de communication qui est connecté à un système de réseau sans fil local, comprenant :
un module d'identité d'abonné, apte à stocker des informations d'identité d'abonné ;
un module d'interface de réseau sans fil, apte à accéder au système de réseau sans fil local ;
une unité centrale connectée entre le module d'identité d'abonné et le module d'interface de réseau sans fil, apte à commander à l'appareil d'identité d'abonné d'établir une communication à travers le système de réseau sans fil avec le terminal de communication et envoyer les informations d'identité au terminal de communication,
dans lequel l'établissement par l'unité centrale d'une communication avec le terminal de communication à travers le système de réseau sans fil comprend les étapes consistant à :
lancer une interrogation de diffusion au terminal de communication après que l'appareil d'identité d'abonné soit entré dans une région couverte par le système de réseau sans fil local ;
recevoir une réponse à l'interrogation de diffusion envoyée par le terminal de communication, et établir la liaison de transmission de communication avec le terminal de communication.

11. Système de communication comprenant un réseau de service de communication, au moins un terminal de communication et au moins un appareil d'identité d'abonné et un système de réseau sans fil local pour réaliser une communication entre le terminal de communication et l'appareil d'identité d'abonné, **caractérisé en ce que** le terminal de communication est un terminal selon l'une quelconque des revendications 1 à 8, et l'appareil d'identité d'abonné est un appareil selon la revendication 10.

12. Procédé de commande de communication d'un terminal de communication pour obtenir des informations d'identité d'abonné d'appareils d'identité d'abonné à travers un système de réseau sans fil local et rattacher des abonnés correspondant aux informations d'identité d'abonné, **caractérisé en ce que**
l'appareil d'identité d'abonné lance une interrogation de diffusion au terminal de communication après que l'appareil d'identité d'abonné soit entré dans une région couverte par le système de réseau sans fil local ; le terminal de communication répond à l'interrogation de diffusion et établit une liaison de transmission de communication avec l'appareil d'identité d'abonné ;
le terminal de communication obtient des informations d'identité d'abonné de l'appareil d'identité d'abonné à travers le système de réseau sans fil local, et rattache un abonné correspondant aux informations d'identité d'abonné ;
le terminal de communication envoie une demande d'enregistrement à un réseau de service de communication qui porte les informations d'identité d'abonné, des informations d'identité de communication correspondant aux abonnés allouées par le réseau de service de communication et des deuxièmes informations d'adresse du terminal de communication allouées par le réseau de service de communication, de sorte que le terminal de communication effectue un processus d'authentification d'enregistrement sur le système de réseau de service de communication pour les abonnés ;
le réseau de service de communication enregistre de manière correspondante les informations d'identité d'abonné, les informations d'identité de communication correspondant aux abonnés et les deuxièmes informations d'adresse du terminal de communication, et traite la communication de l'abonné correspondant aux informations d'identité d'abonné en fonction de la correspondance entre les informations d'identité de communication de l'abonné et les deuxièmes informations d'adresse du terminal de communication.

13. Procédé de commande de communication selon la revendication 12, dans lequel
les étapes par lesquelles l'appareil d'identité d'abonné lance une interrogation de diffusion, le terminal de communication répond à l'interrogation de diffusion et établit la liaison de transmission de communication avec l'appareil d'identité d'abonné, et le terminal de communication obtient les informations d'identité d'abonné de l'appareil d'identité d'abonné à travers le système de réseau sans fil local et rattache un abonné correspondant aux informations d'identité d'abonné comprennent les étapes consistant à :
envoyer le message d'interrogation de diffusion portant des informations d'adresse de l'appareil d'identité d'abonné à travers le système de réseau sans fil local par l'appareil d'identité d'abonné ;
recevoir le message d'interrogation de diffusion à travers le système de réseau sans fil local, et retourner le message de réponse portant les premières informations d'adresse du terminal de communication à l'appareil d'identité d'abonné en fonction des informations d'adresse de l'appareil d'identité d'abonné par le terminal de communication, dans lequel les premières informations d'adresse sont allouées par le système de réseau sans fil local,
établir la liaison de transmission de communication à travers le système de réseau sans fil local avec le terminal de communication par l'appareil d'identité d'abonné en fonction des premières informations d'adresse,
obtenir les informations d'identité d'abonné à travers la liaison de transmission de communication et rattacher l'abonné correspondant aux informations d'identité d'abonné par le terminal de communication.

14. Procédé de commande de communication selon la revendication 12, dans lequel les étapes par lesquelles le terminal de communication établit la liaison de transmission de communication avec l'appareil d'identité d'abonné, et le terminal de communication obtient des informations d'identité d'abonné de l'appareil d'identité d'abonné à travers le système de réseau sans fil local et rattache un abonné correspondant aux informations d'identité d'abonné comprennent les étapes consistant à :
établir les liaisons de transmission de communication avec deux ou plus d'appareils d'identité d'abonné en même temps ou en division de temps par le terminal de communication ;
rattacher deux ou plus d'abonnés correspondant aux deux ou plus d'appareils d'identité d'abonné au terminal de communication simultanément après que le terminal de communication a respectivement obtenu les informations d'identité d'abonné stockées dans chaque appareil d'identité d'abonné.

15. Procédé de commande de communication selon la revendication 12, comprenant en outre les étapes consistant à :
effectuer l'authentification pour l'appareil d'identité d'abonné et établir la liaison de transmission de communication avec l'appareil d'identité d'abonné authentifié avec succès par le terminal de communication, lorsque la liaison de transmission de communication est établie entre le terminal de communication et l'appareil d'identité d'abonné.

16. Procédé de commande de communication selon la revendication 15, dans lequel
le terminal de communication authentifie l'appareil d'identité d'abonné en utilisant une clé qui est préréglée dans le terminal de communication.

17. Procédé de commande de communication selon la revendication 12, dans lequel
lorsque la liaison de transmission de communication entre l'appareil d'identité d'abonné et le terminal de communication est interrompue, le terminal de communication détache un abonné correspondant à un module d'identité d'abonné.

18. Procédé de commande de communication selon la revendication 12, comprenant en outre les étapes consistant à lire les informations d'identité d'abonné d'une carte SIM intégrée et rattacher l'abonné correspondant par le terminal de communication.

19. Procédé de commande de communication selon la revendication 14, comprenant en outre les étapes consistant à :
lorsque deux ou plus d'abonnés sont rattachés à un même terminal de communication, avant d'initier un appel sortant, régler l'un des abonnés rattachés en tant qu'abonné actif et initier l'appel sortant, dans lequel l'appel porte les informations d'identité de communication de l'abonné actif.

20. Procédé de commande de communication selon la revendication 19, dans lequel
lorsqu'un abonné correspondant aux informations d'identité d'abonné d'un appareil d'identité d'abonné est un abonné non actif, l'étape consistant à régler l'abonné en tant qu'abonné actif comprend les étapes consistant à :
envoyer une instruction active comprenant les informations d'identité d'abonné au terminal de communication à travers l'appareil d'identité d'abonné,
recevoir l'instruction active et régler un abonné correspondant en tant qu'abonné actif par le terminal de communication ; ou
sélectionner l'un des abonnés rattachés de manière correspondante en tant qu'abonné actif à travers une opération d'un module d'interface homme-machine du terminal de communication par un abonné, et régler l'abonné rattaché correspondant en tant qu'abonné actif en fonction de l'instruction d'opération active de l'abonné par le terminal de communication.

21. Procédé de commande de communication selon la revendication 20, dans lequel l'étape par laquelle le terminal de communication règle l'abonné en tant qu'abonné actif comprend en outre l'étape consistant à ce que :
l'abonné est authentifié, par le terminal de communication, en fonction du mot de passe d'abonné correspondant entré par l'abonné.

22. Procédé de commande de communication selon la revendication 21, dans lequel le mot de passe d'abonné est téléchargé du système de réseau de service de communication lorsque l'abonné correspondant enregistre le mot de passe d'abonné.

23. Procédé de commande de communication selon la revendication 14, dans lequel lorsque deux ou plus d'abonnés correspondant aux informations d'identité d'abonné sont rattachés au même terminal de communication, le terminal de communication règle différentes interfaces et/ou informations d'indication pour des abonnés appropriés.

24. Procédé de commande de communication selon la revendication 23, comprenant en outre les étapes consistant à :
lorsque le terminal de communication reçoit un appel entrant portant les informations d'identité de communication d'un abonné, déterminer s'il y a un abonné rattaché correspondant et, si tel est le cas, connecter l'appel entrant et indiquer l'abonné avec les informations d'indication correspondantes, sinon refuser de retourner une réponse.

25. Procédé de commande de communication selon la revendication 24, dans lequel
l'interface d'abonné et/ou les informations d'indication sont stockées de manière correspondante du côté du réseau de service et sont téléchargées sur le lieu local par le terminal de communication du côté du réseau de service lorsqu'un abonné correspondant s'enregistre dans le réseau de service ; ou
l'interface d'abonné et/ou les informations d'indication sont réglées dans le terminal de communication local.
